# EUROPÄISCHE PATENTSCHRIFT

(11) **EP 1 189 485 B1**
(45) Veröffentlichungstag und Bekanntmachung des Hinweises auf die Patenterteilung: **29.12.2004**
(21) Anmeldenummer: 01122009.2
(22) Anmeldetag: 13.09.2001
(51) Int. Cl.: H05B 41/28

(54) **Elektronisches Vorschaltgerät mit Zwischenkreisregelung**
Electronic ballast with DC-link voltage regulation
Ballast électonique avec régulation de la tension intermédiaire

(30) Priorität: 15.09.2000 DE 10045713; 13.06.2001 DE 10128588
(43) Veröffentlichungstag der Anmeldung: 20.03.2002
(73) Patentinhaber: TridonicAtco GmbH & Co. KG, 6851 Dornbirn (AT)
(72) Erfinder: Zudrell-Koch, Stefan, Dipl.-Ing. (NTB), 6850 Dornbirn (AT); Marent, Günter, Ing., 6850 Dornbirn (AT)
(74) Vertreter: Rupp, Christian, Dipl.-Phys.

(56) Entgegenhaltungen:
- US-A- 5 698 952
- US-A- 6 043 633
- SUN J ET AL: "Modeling and practical design issues for average current control" APPLIED POWER ELECTRONICS CONFERENCE AND EXPOSITION, 1999. APEC '99. FOURTEENTH ANNUAL DALLAS, TX, USA 14-18 MARCH 1999, PISCATAWAY, NJ, USA,IEEE, US, 14. März 1999 (1999-03-14), Seiten 980-986, XP010323585 ISBN: 0-7803-5160-6
- GANESH A ET AL: "An electronic ballast with a novel low-cost power factor correction circuit" INDUSTRY APPLICATIONS CONFERENCE, 1998. THIRTY-THIRD IAS ANNUAL MEETING. THE 1998 IEEE ST. LOUIS, MO, USA 12-15 OCT. 1998, NEW YORK, NY, USA,IEEE, US, 12. Oktober 1998 (1998-10-12), Seiten 2025-2031, XP010312893 ISBN: 0-7803-4943-1
- ALONGE F ET AL: "Improved peak-current-mode control for unity power factor AC/DC converters in discontinuous conduction mode" POWER ELECTRONICS AND DRIVE SYSTEMS, 1999. PEDS '99. PROCEEDINGS OF THE IEEE 1999 INTERNATIONAL CONFERENCE ON HONG KONG 27-29 JULY 1999, PISCATAWAY, NJ, USA,IEEE, US, 27. Juli 1999 (1999-07-27), Seiten 927-932, XP010351957 ISBN: 0-7803-5769-8
- ZANE R ET AL: "A mixed-signal ASIC power-factor-correction (PFC) controller for high frequency switching rectifiers" POWER ELECTRONICS SPECIALISTS CONFERENCE, 1999. PESC 99. 30TH ANNUAL IEEE CHARLESTON, SC, USA 27 JUNE-1 JULY 1999, PISCATAWAY, NJ, USA,IEEE, US, 27. Juni 1999 (1999-06-27), Seiten 117-122, XP010346887 ISBN: 0-7803-5421-4
- BASSETT J A: "New, zero voltage switching, high frequency boost converter topology for power factor correction" TELECOMMUNICATIONS ENERGY CONFERENCE, 1995. INTELEC '95., 17TH INTERNATIONAL THE HAGUE, NETHERLANDS 29 OCT.-1 NOV. 1995, NEW YORK, NY, USA,IEEE, US, 29. Oktober 1995 (1995-10-29), Seiten 813-820, XP010161333 ISBN: 0-7803-2750-0

## Beschreibung

Die vorliegende Erfindung betrifft ein elektronisches Vorschaltgerät zum Betreiben einer Gasentladungslampe nach dem Oberbegriff des Anspruches 1.

Der Einsatz elektronischer Vorschaltgeräte zum Betreiben von Gasentladungslampen führt aufgrund von reduzierten Vorschaltgeräteverlusten sowie einem verbesserten Lampenwirkungsgrad zu deutlichen Energieeinsparungen. Den Eingang eines elektronischen Vorschaltgerätes bildet üblicherweise ein an das Spannungsversorgungsnetz angeschlossenes Hochfrequenzfilter, welches mit einer Gleichrichterschaltung verbunden ist. Die von der Gleichrichterschaltung gleichgerichtete Versorgungsspannung wird einer Glättungsschaltung zum Erzeugen einer Zwischenkreisspannung zugeführt, ein mit der Zwischenkreisspannung gespeister Wechselrichter erzeugt schließlich eine hochfrequente Wechselspannung, welche an den Lastkreis mit der darin angeordneten Gasentladungslampe angelegt wird. Das Betreiben der Lampe mit der hochfrequenten Wechselspannung hat eine Verringerung der Elektrodenverluste sowie eine Steigerung der Lichtausbeute in der positiven Säule der Lampe zur Folge.

Die Aufgabe der Glättungsschaltung besteht in erster Linie darin, die zum Betreiben der Lampe erforderliche Leistung bereitzustellen. Bei einem in der WO 99/34647 A1 beschriebenen elektronischen Vorschaltgerät wird als Glättungsschaltung ein Hochsetzsteller verwendet, dessen steuerbarer Schalter zur Regelung der Zwischenkreisspannung von einer Steuerschaltung angesteuert wird. Eine Regelung ist erforderlich, da sich die Ausgangsleistung des Vorschaltgerätes verändert, was sich automatisch auf die Zwischenkreisspannung auswirkt.

Eine weitere Aufgabe der Glättungsschaltung besteht darin, daß Entstehen von Störfrequenzen, die ins Versorgungsnetz zurückstrahlen können, weitestgehend zu vermeiden. Derartige Störfrequenzen entstehen beispielsweise dann, wenn zwischen der anliegenden Spannung und dem Strom Phasenverschiebungen auftreten. Die Regelung erfolgt daher im Idealfall derart, daß der Strom möglichst sinusförmig ist und keine Phasenverschiebung gegenüber der Spannung aufweist.

Der oben beschriebene Hochsetzsteller hat allerdings die Eigenschaft, daß der Stromfluß vor einem Nulldurchgang der aufgenommenen Spannung sprungartig auf Null geht und erst nach dem Nulldurchgang mit einer gewissen zeitlichen Verzögerung wieder einsetzt. Der Grund hierfür liegt in den über dem steuerbaren Schalter des Hochsetzstellers liegenden Schaltkapazitäten. Der sprunghafte Stromabfall auf Null ist von Nachteil, da in diesem Zeitraum Strom und Spannung außer Phase sind, was - wie oben beschrieben - zu den unerwünschten Oberwellen und Störungen führt. Dieses Problem tritt bei der Verwendung von Schaltreglern allgemein auf.

Aus der Patentschrift US 5,698,952 ist ein Vorschaltgerät bekannt, das eine Glättungsschaltung mit einem Schaltregler aufweist. Dabei wird die Zwischenkreisspannung erfasst wird und in Abhängigkeit der Zwischenkreisspannung die Glättungsschaltung angesteuert.

In der Patentschrift US 6,043,633 ist ein Verfahren und eine Vorrichtung zur Kontrolle eines Hochsetzstellers beschrieben. Dabei werden Störströme, verursacht durch parasitäre Kapazitäten, durch Anpassung der Einschaltzeiten des Schalters des Hochsetzstellers reduziert oder kompensiert.

Es ist daher Aufgabe der vorliegenden Erfindung, ein elektronisches Vorschaltgerät anzugeben, welches eine nochmals verbesserte Oberschwingungsbegrenzung aufweist.

Die Aufgabe wird durch ein elektronisches Vorschaltgerät nach Anspruch 1 gelöst. Dieses enthält zunächst eine an eine Wechselspannungsquelle anschließbare Gleichrichterschaltung, eine an den Ausgang der Gleichrichterschaltung angeschlossene Glättungsschaltung zum Erzeugen einer Zwischenkreisspannung und einen mit der Zwischenkreisspannung gespeisten Wechselrichter, an dessen Ausgang ein Anschlüsse für die Lampe enthaltender Lastkreis angeschlossen ist. Die Glättungsschaltung wird durch einen Schaltregler gebildet, dessen steuerbarer Schalter von einer Steuerschaltung angesteuert wird. Hierzu erfaßt die Steuerschaltung die Zwischenkreisspannung und erzeugt in Abhängigkeit davon ein Steuersignal für den Schalter.

Erfindungsgemäß ist die Steuerschaltung derart ausgebildet, daß sie zusätzlich die Eingangsspannung der Glättungsschaltung erfaßt und die Einschaltzeiten für den steuerbaren Schalter des Schaltreglers verlängert, wenn sich die Eingangsspannung ihrem Minimalwert annähert.

Der Kemgedanke der vorliegenden Erfindung besteht somit darin, die Einschaltzeiten des Schalters in Abhängigkeit von dem aktuellen Wert der Eingangsspannung zu verlängern. Es hat sich gezeigt, daß durch diese Maßnahme das sprunghafte Abfallen des Stroms und damit das Entstehen von Oberwellen und Störfrequenzen vermieden werden kann. Weiterbildungen der Erfindung sind Gegenstand der Unteransprüche.

So besteht eine vorteilhafte Ausführung der Erfindung darin, daß die Verlängerung der Einschaltzeiten umso größer ist, je niedriger die Eingangsspannung ist. Um dies auf einfache Weise zu erreichen, besteht eine besonders vorteilhafte Weiterbildung des erfindungsgemäßen Vorschaltgeräts darin, daß die Steuerschaltung digital arbeitet. Hierzu weist die Steuerschaltung Analog/Digital-Wandler auf, welche die erfaßte Zwischenkreisspannung und die Eingangsspannung jeweils in zwei Digitalwerte mit einer Genauigkeit von mindestens 2 bit - vorzugsweise von 12 bit - umsetzen. Innerhalb der Steuerschaltung ist dann ein digitaler Regelkreis vorgesehen, der auf Basis der beiden Digitalwerte eine Schaltinformation zum Betreiben des Schalters berechnet und an eine Treiberschaltung übermittelt, die wiederum diese Schaltinformationen in entsprechende Steuersignale umsetzt.

Der Vorteil dieser digitalen Ausführung der Steuerschaltung besteht darin, daß der Einfluß der verschiedenen Betriebsparameter zum Ansteuern des Schalters wesentlich einfacher berücksichtigt werden kann, als dies bei einer Schaltung in rein analoger Form der Fall wäre. Hierzu kann vorgesehen sein, daß die Steuerschaltung einen Speicher mit einer Vergleichstabelle aufweist, in der jedem Wert der Eingangsspannung ein bestimmtes Zeitintervall zuordnet wird, um das die Einschaltzeit für den steuerbaren Schalter verlängert wird. Ergänzend ist anzumerken, daß eine Umsetzung der gemessenen Betriebsparameter in Digitalwerte mit einer Genauigkeit von mindestens 2 bit unbedingt erforderlich ist, da beispielsweise bei einer "quasi-digitalen" Regelung durch einen einfachen Vergleich von Betriebsparametern mit Referenzwerten keine ausreichend hohe Genauigkeit und damit letztendlich auch keine Stabilität für die Zwischenkreisspannung erzielt werden kann. Im Gegensatz dazu kann bei der erfindungsgemäßen digitalen Regelung zum einen eine sehr hohe Stabilität erzielt werden, zum anderen nimmt eine digitale Schaltung nur wenig Platz in Anspruch, so daß das Vorschaltgerät insgesamt kleiner gestaltet werden kann.

Eine andere Weiterbildung der Erfindung besteht darin, daß die erfindungsgemäße Steuerschaltung ferner auch zum Ansteuern des Wechselrichters und damit zum Betreiben der Lampe verwendet wird. Hierzu kann ein weiterer Analog/Digital-Wandler vorgesehen sein, der einen von der Steuerschaltung erfaßten Betriebsparameter des Lastkreises in einen Digitalwert umsetzt, wobei die Steuerschaltung auf Basis dieses Digitalwertes Schaltinformationen zum Betreiben des Wechselrichters berechnet. Als Betriebsparameter können beispielsweise die Lampenspannung und/oder der Lampenstrom erfaßt werden.

Im folgenden soll die Erfindung anhand der beiliegenden Zeichnung, die ein erfindungsgemäßes Vorschaltgerät darstellt, erläutert werden.

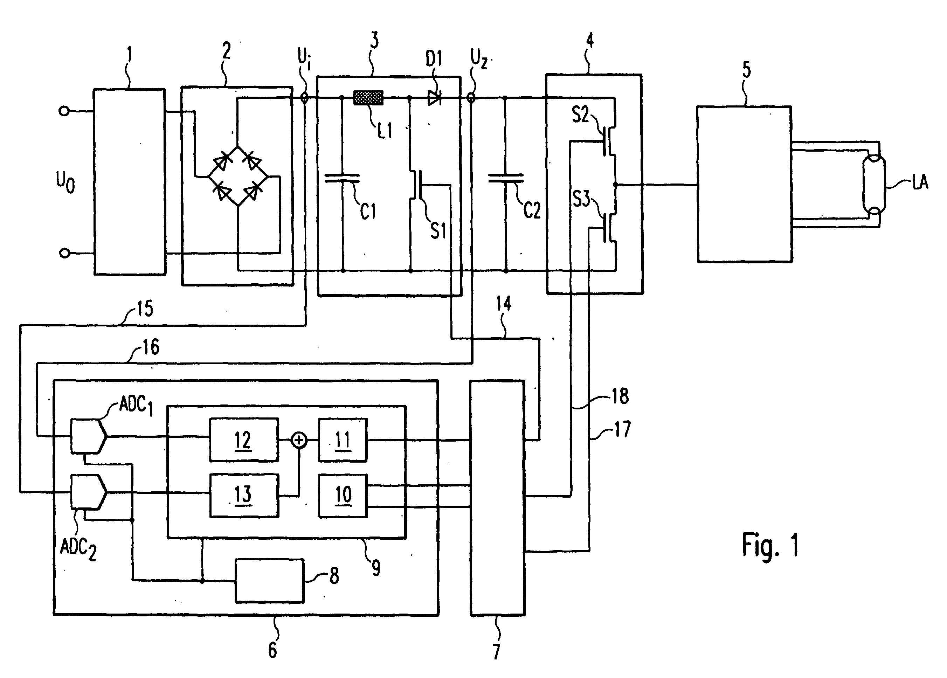

Das in der einzigen Figur 1 dargestellte Vorschaltgerät ist eingangsseitig über ein Hochfrequenzfilter 1 an eine Netzversorgungsspannung U₀ angeschlossen. Der Ausgang des Hochfrequenzfilters 1 ist mit einer Gleichrichterschaltung 2 in Form eines Vollbrückengleichrichters verbunden.

Die von der Gleichrichterschaltung 2 gleichgerichtete Versorgungswechselspannung stellt zugleich die Eingangsspannung Uᵢ für die Glättungsschaltung 3 dar. Diese wird im vorliegenden Beispiel durch einen Glättungskondensator C1 sowie einen eine Induktivität L1, einen steuerbaren Schalter in Form eines MOS-Feldeffekttransistors S1 und eine Diode D1 aufweisenden Hochsetzsteller gebildet. Anstelle des Hochsetzstellers können auch andere Schaltregler verwendet werden.

Durch ein entsprechendes Schalten des MOS-Feldeffekttransistors S1 wird in bekannter Weise eine über dem nachfolgend angeordneten Speicherkondensator C2 anliegende Zwischenkreisspannung U_{z} erzeugt, die dem Wechselrichter 4 zugeführt wird. Der Wechselrichter 4 wird durch zwei weitere in einer Halbbrückenanordnung angeordnete MOS-Feldeffekttransistoren S2 und S3 gebildet. Durch ein hochfrequentes Takten dieser beiden Schalter S2 und S3 wird an deren Mittenabgriff eine hochfrequente Wechselspannung erzeugt, die dem Lastkreis 5 mit der daran angeschlossenen Gasentladungslampe LA zugeführt wird.

Die Funktionsweise des Hochsetzstellers ist im Prinzip bereits bekannt und soll daher im folgenden lediglich kurz zusammengefaßt werden. Ist der Feldeffekttransistor S1 leitend, steigt der Strom in der Induktivität L1 linear an. Sperrt hingegen der Feldeffekttransistor S1, entlädt sich der Strom in den Speicherkondensator C2. Durch ein gezieltes Ansteuern des Schalters S1 kann die Energieaufnahme des Hochsetzstellers und damit auch die an dem Speicherkondensator C2 anliegende Zwischenkreisspannung U_{z} beeinflußt werden.

Das Ansteuern des Schalters S1 des Hochsetzstellers erfolgt durch eine Steuerschaltung 6, welche entsprechende Schaltinformationen erzeugt und an eine sich an die Steuerschaltung 6 anschließende Treiberschaltung 7 übermittelt. Diese setzt die Schaltinformationen in entsprechende Steuersignale um und steuert über die Leitung 14 das Gate des Feldeffekttransistors S1. In gleicher Weise werden von der Steuerschaltung 6 und der Treiberschaltung 7 auch Signale zum Ansteuern der beiden Feldeffekttransistoren S2 und S3 des Wechselrichters 4 erzeugt. Sämtliche Komponenten der Steuereinheit 6 werden über einen zentralen Taktgeber 8 synchronisiert, der ihnen entsprechende Taktsignale übermittelt. Die Steuereinheit 6 ist als anwendungsspezifische integrierte Schaltung (Application Specific Integrated Circuit - ASIC) ausgebildet und nimmt dementsprechend nur wenig Platz ein.

Das Berechnen der Schaltinformationen für den Schalter S1 des Hochsetzstellers erfolgt durch einen innerhalb der Steuerschaltung 6 angeordneten digitalen Regelkreis 9. Hierzu weist die Steuerschaltung zwei Analog/Digital-Wandler ADC₁ und ADC₂ auf, welche die über die Eingangsleitung 15 zugeführte Eingangsspannung Uᵢ und die über die Eingangsleitung 16 zugeführte Zwischenkreisspannung U_{z} in Digitalwerte umsetzen. Diese Digitalwerte weisen eine Genauigkeit von mindestens 2 bit, vorzugsweise von 12 bit auf. Diese digitalisierten Werte werden beide dem Regelkreis 9 zugeführt, der Wert der Zwischenkreisspannung U_{z} einem ersten Rechenblock 12 und der Wert der Eingangsspannung Uᵢ einem Schaltzeit-Verlängerungsblock 13. Vorzugsweise werden die beiden Analog/Digital-Wandler ADC₁ und ADC₂ durch einen einzigen Analog/Digital-Wandler gebildet, der im Zeitmultiplex arbeitet.

Der Rechenblock 12 dient dazu, auf Basis des aktuellen Werts der Zwischenkreisspannung U_{z} eine geeignete Einschaltdauer für den Schalter S1 zu berechnen. Bevor allerdings anhand der von dem Rechenblock 12 bestimmten Einschaltdauer ein Steuersignal für den Schalter S1 erzeugt wird, wird die Einschaltdauer allerdings noch durch einen Zusatzwert ergänzt, der von dem Schaltzeit-Verlängerungsblock 13 bestimmt wird. Hierzu weist der Schaltzeit-Verlängerungsblock 13 einen Speicher mit einer Tabelle auf, die jedem Wert der Eingangsspannung Uᵢ ein bestimmtes Zeitintervall zuordnet, um das die Einschaltzeit des Schalters S1 verlängert wird. Der Wert dieses Zusatzintervalls wird der von dem Rechenblock 12 berechneten Einschaltdauer hinzugefügt und einem Ausgangsblock 11 übermittelt. Dieser erzeugt eine entsprechende Schaltinformation, die der Treiberschaltung 7 zugeführt wird, welche dann schließlich ein entsprechendes Steuersignal über die Leitung 14 an das Gate des Transistors S1 übermittelt.

Die in dem Speicher des Schaltzeit-Verlängerungsblocks 13 gespeicherten Informationen können beispielsweise im Rahmen einer Versuchsreihe empirisch ermittelt werden. Alternativ dazu besteht allerdings auch die Möglichkeit, die Einschaltverlängerung nach einer bestimmten Funktion zu berechnen. In allgemeinster Weise besteht der Zusammenhang zwischen der Einschaltverlängerung und der Eingangsspannung darin, daß die Einschaltverlängerung umso größer ist, je niedriger die Eingangsspannung Uᵢ ist. Ferner kann vorgesehen sein, daß oberhalb eines bestimmten Wertes überhaupt keine Verlängerung der Einschaltzeit erfolgt.

Ergänzend ist zu bemerken, daß die Steuerschaltung 6 auch zum Betreiben der beiden Schalter S2 und S3 des Wechselrichters 4 verwendet wird. Hierzu können ein oder mehrere - nicht dargestellte - Analog/Digital-Wandler vorgesehen sein, welche dem Lastkreis 5 entnommene Betriebsparameter in Digitalwerte umsetzen und dem digitalen Regelkreis 9 zuführen. Dargestellt ist ein Regelblock 10, der in Abhängigkeit von den Eingangssignalen Steuerinformationen für die Schalter S2 und S3 berechnet und der Treiberschaltung 7 übermittelt. Die Treiberschaltung 7 erzeugt wiederum entsprechende Steuersignale und überträgt diese über die Leitungen 17 und 18 an die Gates der beiden Feldeffekttransistoren S2 und S3 des Wechselrichters 4.

Der Vorteil dieser digitalen Ausgestaltung der Steuerschaltung besteht darin, daß hierdurch die Regeleigenschaften sehr flexibel gehalten werden können und die verschiedenen Einflüsse der Betriebsparameter auf einfache Weise berücksichtigt werden können. Darüber hinaus ist die digitale Ausgestaltung auch mit einer räumlichen Einsparung verbunden, so daß das erfindungsgemäße Vorschaltgerät in seinen Abmessungen insgesamt äußerst kompakt gehalten werden kann. Dies ist insbesondere dann der Fall, wenn die Steuerschaltung 6 als anwendungsspezifische integrierte Schaltung (Application Specific Integrated Circuit - ASIC) ausgebildet ist. Aufgrund der Verlängerung der Einschaltzeiten des Schalters des Hochsetzstellers bei niedrigen Eingangsspannungen kann ferner eine deutliche Reduzierung des Entstehens von Oberwellen erreicht werden.

## Patentansprüche

1. Elektronisches Vorschaltgerät für mindestens eine Gasentladungslampe (LA), mit einer an eine Wechselspannungsquelle (U₀) anschließbaren Gleichrichterschaltung (2), einer an den Ausgang der Gleichrichterschaltung (2) angeschlossenen Glättungsschaltung (3) zum Erzeugen einer Zwischenkreisspannung (U_{Z}) und einem mit der Zwischenkreisspannung (U_{Z}) gespeisten Wechselrichter (4), an dessen Ausgang ein Anschlüsse für die Lampe (LA) enthaltender Lastkreis (5) angeschlossen ist,
wobei die Glättungsschaltung (3) durch einen Schaltregler gebildet wird und das Vorschaltgerät ferner eine Steuerschaltung (6) aufweist, welche die Zwischenkreisspannung (U_{Z}) erfaßt und einen steuerbaren Schalter (S1) des Schaltreglers in Abhängigkeit von dem Wert der Zwischenkreisspannung (U_{Z}) ansteuert,
**dadurch gekennzeichnet,**
**dass**
- die Steuerschaltung (6) ferner die Eingangsspannung (Uᵢ) der Glättungsschaltung (3) erfaßt
- die Steuerschaltung unterhalb eines bestimmten Grenzwertes der Eingangsspannung (Uᵢ) die Einschaltzeiten für den steuerbaren Schalter (S1) verlängert und
- oberhalb des Grenzwertes der Eingangsspannung (Uᵢ) keine Verlängerung der Einschaltzeit erfolgt.

2. Elektronisches Vorschaltgerät nach Anspruch 1,
**dadurch gekennzeichnet,**
**dass** die Verlängerung der Einschaltzeiten für den steuerbaren Schalter (S1) jeweils durch Hinzufügen eines Zusatzintervalls erfolgt.

3. Elektronisches Vorschaltgerät nach Anspruch 1 oder 2,
**dadurch gekennzeichnet,**
**daß** die Verlängerung der Einschaltzeit umso größer ist, je niedriger die Eingangsspannung (Uᵢ) ist.

4. Elektronisches Vorschaltgerät nach einem der Ansprüche 1 bis 3,
**dadurch gekennzeichnet,**
**daß** die Steuerschaltung (6) zwei Analog/Digital-Wandler (ADC₁, ADC₂) zum Umsetzen der Zwischenkreisspannung (U_{Z}) und der Eingangsspannung (Uᵢ) in zwei aus mindestens 2 bit bestehende Digitalwerte aufweist,
wobei die Steuerschaltung (6) auf Basis dieser Digitalwerte in einem digitalen Regelkreis (14) eine Schaltinformation zum Betreiben des steuerbaren Schalters (S1) des Schaltreglers berechnet und an eine Treiberschaltung (7) übermittelt, die diese Schaltinformation in ein entsprechendes Steuersignal zum Ansteuern des Schalters (S1) umsetzt.

5. Elektronisches Vorschaltgerät nach Anspruch 4,
**dadurch gekennzeichnet,**
**daß** die Steuerschaltung (6) einen Speicher (13) aufweist, in dem jedem Wert der Eingangsspannung (Uᵢ) ein bestimmtes Zeitintervall zugeordnet wird, um das die Einschaltzeit für den steuerbaren Schalter (S1) verlängert wird.

6. Elektronisches Vorschaltgerät nach Anspruch 4 oder 5,
**dadurch gekennzeichnet,**
**daß** die Steuerschaltung (6) ferner mindestens einen Betriebsparameter des Lastkreises (5) erfaßt,
wobei die Steuerschaltung (6) einen weiteren Analog/Digital-Wandler zum Umsetzen dieses Betriebsparameters in einen aus mindestens 2 bit bestehenden Digitalwert aufweist, auf Basis dieses Digitalwerts in einem weiteren digitalen Regelkreis (10) eine Schaltinformation zum Betreiben des Wechselrichters (4) berechnet und an die Treiberschaltung (7) übermittelt, welche diese Schaltinformation in ein entsprechendes Steuersignal zum Ansteuern des Wechselrichters (4) umsetzt.

7. Elektronisches Vorschaltgerät nach Anspruch 6,
**dadurch gekennzeichnet,**
**daß** die Steuerschaltung (6) die Lampenspannung erfaßt.

8. Elektronisches Vorschaltgerät nach Anspruch 6 oder 7,
**dadurch gekennzeichnet,**
**daß** die Steuerschaltung (6) den Lampenstrom erfaßt.

9. Elektronisches Vorschaltgerät nach einem der Ansprüche 4 bis 8,
**dadurch gekennzeichnet,**
**daß** die Steuerschaltung (6) einen Taktgeber (8) zum Übermitteln eines Taktsignales an die Komponenten (ADC₁, ADC₂, 8-13) der Steuereinheit (6) aufweist.

10. Elektronisches Vorschaltgerät nach einem der vorherigen Ansprüche,
**dadurch gekennzeichnet,**
**daß** die Steuerschaltung (6) als anwendungsspezifische integrierte Schaltung ausgebildet ist.

11. Elektronisches Vorschaltgerät nach einem der vorherigen Ansprüche,
**dadurch gekennzeichnet,**
**daß** die von den Analog/Digital-Wandlem (ADC₁, ADC₂) erzeugten Digitalwerte eine Genauigkeit von 12 bit haben.

12. Elektronisches Vorschaltgerät nach einem der vorherigen Ansprüche,
**dadurch gekennzeichnet,**
**daß** die Glättungsschaltung (3) durch einen Hochsetzsteller gebildet wird.

13. Verfahren zum Erzeugen einer Zwischenkreisspannung (U_{Z}) in einem elektronischen Vorschaltgerät für mindestens eine Gasentladungslampe (LA), mit einer an eine Wechselspannungsquelle (U₀) anschließbaren Gleichrichterschaltung (2), einer an den Ausgang der Gleichrichterschaltung (2) angeschlossenen Glättungsschaltung (3) zum Erzeugen der Zwischenkreisspannung (U_{Z}) und einem mit der Zwischenkreisspannung (U_{Z}) gespeisten Wechselrichter (4), an dessen Ausgang ein Anschlüsse für die Lampe (LA) enthaltender Lastkreis (5) angeschlossen ist,
wobei die Glättungsschaltung (3) durch einen Schaltregler gebildet wird und das Vorschaltgerät ferner eine Steuerschaltung (6) mit Mitteln zur Erfassung der Zwischenkreisspannung (U_{Z}) und einer Eingangsspannung (Uᵢ) der Glättungsschaltung (3) und mit Mitteln zur Ansteuerung eines steuerbaren Schalters (S1) des Schaltreglers aufweist,
**gekennzeichnet durch** die Schritte
- Erfassen der Zwischenkreisspannung (U_{Z}) und der Eingangsspannung (Uᵢ) **durch** die Steuerschaltung (6),
- Ansteuern des steuerbaren Schalters (S1) **durch** die Steuerschaltung (6) in Abhängigkeit der Zwischenkreisspannung (U_{Z}),
- Verlängerung der Einschaltzeit für den steuerbaren Schalter (S1) falls die Eingangsspannung (Uᵢ) unterhalb eines bestimmten Wertes liegt, und
- keine Verlängerung der Einschaltzeit für den steuerbaren Schalter (S1) falls die Eingangsspannung (Uᵢ) oberhalb des bestimmten Wertes liegt.

14. Verfahren nach Anspruch 13,
**dadurch gekennzeichnet,**
**dass** die Verlängerung der Einschaltzeit für den steuerbaren Schalter (S1) durch Hinzufügen eines Zusatzintervalls erfolgt.

## Claims

1. Electronic ballast for at least one gas discharge lamp (LA), having a rectifier circuit (2) connectable to an a.c. voltage source (U₀), a smoothing circuit (3), connected to the output of the rectifier circuit (2), for generating an intermediate circuit voltage (U_{z}), and an inverter (4) fed with the intermediate circuit voltage (U_{z}), at the output of which inverter a connection for the load circuit (5) containing the lamp (LA) is connected,
the smoothing circuit (3) being constituted by a switching regulator and the ballast further having a control circuit (6) which detects the intermediate circuit voltage (U_{z}) and controls a controllable switch (S1) of the switching regulator in dependence upon the value of the intermediate circuit voltage (U_{z}),
**characterized in that**,
- the control circuit (6) further detects an input voltage (Uᵢ) of the smoothing circuit (3)
- the control circuit extends the on-state times for the controllable switch (S1) below a certain limit value of the input voltage (Uᵢ) and
- above the limit value of the input voltage (Uᵢ) no extension of the on-state time is effected.

2. Electronic ballast according to claim 1,
**characterized in that**,
the extension of the on-state times for the controllable switch (S1) is effected in each case by the introduction of an additional interval.

3. Electronic ballast according to claim 1 or 2,
**characterized in that**,
the extension of the on-state time is greater, the lower is the input voltage (Uᵢ).

4. Electronic ballast according to any of claims 1 to 3,
**characterized in that**,
the control circuit (6) has two analog-digital converters (ADC₁, ADC₂) for converting the intermediate circuit voltage (U_{z}) and the input voltage (Uᵢ) into two digital values each consisting of at least two bits,
the control circuit (6) calculating, in a digital regulation circuit (14) on the basis of these digital values, switching information for operation of the controllable switch (S1) of the switching regulator and passing the switching information to a driver circuit (7) which converts this switching information into a corresponding control signal for controlling the switch (S1).

5. Electronic ballast according to claim 4,
**characterized in that**,
the control circuit (6) has a memory (13) in which a particular time interval is allocated to each value of the input voltage (Uᵢ), by which time interval the on-state time for the controllable switch (S1) is extended.

6. Electronic ballast according to claim 4 or 5,
**characterized in that**,
the control circuit (6) additionally detects at least one operational parameter of the load circuit (5),
the control circuit (6) having a further analog-digital converter for converting this operational parameter into a digital value consisting of at least two bits, calculating in a further digital regulation circuit (10), on the basis of this digital value, switching information for operation of the inverter (4) and passing this information on to the driver circuit (7), which converts this switching information into a corresponding control signal for controlling the inverter (4).

7. Electronic ballast according to claim 6,
**characterized in that**,
the control circuit (6) detects the lamp voltage.

8. Electronic ballast according to claim 6 or 7,
**characterized in that**,
the control circuit (6) detects the lamp current.

9. Electronic ballast according to any of claims 4 to 8,
**characterized in that**,
the control circuit (6) has a clock unit (8) for passing on a clock signal to the components (ADC₁, ADC₂, 8-13) of the control circuit (6).

10. Electronic ballast according to any preceding claim,
**characterized in that**,
the control circuit (6) is constituted as an application specific integrated circuit.

11. Electronic ballast according to any preceding claim,
**characterized in that**,
the digital values generated by the analog-digital converters (ADC₁, ADC₂) have a precision of twelve bits.

12. Electronic ballast according to any preceding claim,
**characterized in that**,
the smoothing circuit (3) is constituted by a step-up converter.

13. Method of generating an intermediate circuit voltage (U_{z}) in an electronic ballast for at least one gas discharge lamp (LA), having a rectifier circuit (2) connectable to an a.c. voltage source (U₀), a smoothing circuit (3), connected to the output of the rectifier circuit (2), for generating the intermediate circuit voltage (U_{z}), and an inverter (4) fed with the intermediate circuit voltage (U_{z}), at the output of which inverter a connection for the load circuit (5) containing the lamp (LA) is connected,
the smoothing circuit (3) being constituted by a switching regulator and the ballast further having a control circuit (6) with means for the detection of the intermediate circuit voltage (U_{z}) and an input voltage (Uᵢ) of the smoothing circuit (3) and with means for controlling a controllable switch (S1) of the switching regulator,
**characterized by** the steps,
- detecting the intermediate circuit voltage (U_{z}) and the input voltage (Uᵢ) by means of the control circuit (6),
- controlling the controllable switch (S1) by means of the control circuit (6) in dependence upon the intermediate circuit voltage (U_{z}),
- extending the on-state time for the controllable switch (S1) if the value of the input voltage (Uᵢ) lies below a certain value,
- not extending the on-state time for the controllable switch (S1) if the value of the input voltage (Uᵢ) lies above the certain value.

14. Electronic ballast according to claim 13,
**characterized in that**,
the extension of the on-state times for the controllable switch is effected by the introduction of an additional interval.

## Revendications

1. Ballast électronique destiné à au moins une lampe à décharge gazeuse (LA), comportant un circuit redresseur (2) pouvant être raccordé à une source de tension alternative (U₀), un circuit de lissage (3) raccordé à la sortie du circuit redresseur (2) et destiné à générer une tension de circuit intermédiaire (U_{z}) et un onduleur (4) qui est alimenté avec la tension de circuit intermédiaire (U_{z}) et à la sortie duquel est raccordé un circuit de charge (5) comportant des bornes destinées à la lampe (LA),
le circuit de lissage (3) étant formé par un régulateur de commutation et le ballast comportant en outre un circuit de commande (6) qui détecte la tension de circuit intermédiaire (U_{z}) et qui commande un commutateur commandé (S1) du régulateur de commutation en fonction de la valeur de la tension de circuit intermédiaire (U_{z}),
**caractérisé en ce que**
- le circuit de commande (6) détecte en outre la tension d'entrée (Uᵢ) du circuit de lissage (3),
- le circuit de commande prolonge au-dessous d'une valeur limite déterminée de la tension d'entrée (Uᵢ) les temps de commutation du commutateur commandé (S1) et
- au-dessus de la valeur limite de la tension d'entrée (Uᵢ) aucune prolongation du temps de commutation n'est effectuée.

2. Ballast électronique selon la revendication 1, **caractérisé en ce que** la prolongation des temps de commutation du commutateur commandé (S1) est effectuée à chaque fois en ajoutant un intervalle supplémentaire.

3. Ballast électronique selon la revendication 1 ou 2, **caractérisé en ce que** la prolongation du temps de commutation est d'autant plus grande que la tension d'entrée (Uᵢ) est faible.

4. Ballast électronique selon l'une des revendications 1 à 3, **caractérisé en ce que** le circuit de commande (6) comporte deux convertisseurs analogiques/numériques (ADC₁, ADC₂) destinés à convertir la tension de circuit intermédiaire (U_{z}) et la tension d'entrée (Uᵢ) en deux valeurs numériques constituées d'au moins 2 bits,
le circuit de commande (6) calculant se fondant sur ces valeurs numériques dans un circuit de régulation numérique (14) une information de commutation destinée à faire fonctionner le commutateur commandé (S1) du régulateur de commutation et transmettant cette information à un circuit d'attaque (7) qui convertit cette information de commutation en un signal de commande appropriée destiné à commander le commutateur (S1).

5. Ballast électronique selon la revendication 4, **caractérisé en ce que** le circuit de commande (6) comporte une mémoire (13) dans laquelle il est associé à chaque valeur de la tension d'entrée (Uᵢ) un intervalle de temps déterminé duquel le temps de commutation du commutateur commandé (S1) est prolongé.

6. Ballast électronique selon la revendication 4 ou 5, **caractérisé en ce que** le circuit de commande (6) détecte en outre au moins un paramètre de fonctionnement du circuit de charge (5),
le circuit de commande (6) comportant un autre convertisseur analogique/numérique destiné à convertir ce paramètre de fonctionnement en une valeur numérique constitué d'au moins 2 bits, calculant se fondant sur cette valeur numérique dans un circuit de régulation numérique (10) une information de commutation destinée à faire fonctionner l'onduleur (4) et transmettant cette information de commutation au circuit d'attaque (7) qui convertit cette information de commutation en un signal de commande approprié destiné à commander l'onduleur (4).

7. Ballast électronique selon la revendication 6, **caractérisé en ce que** le circuit de commande (6) détecte la tension de lampe.

8. Ballast électronique selon la revendication 6 ou 7, **caractérisé en ce que** le circuit de commande (6) détecte le courant de lampe.

9. Ballast électronique selon l'une des revendications 4 à 8, **caractérisé en ce que** le circuit de commande (6) comporte un générateur d'horloge (8) destiné à transmettre un signal d'horloge aux composants (ADC₁, ADC₂, 8-13) de l'unité de commande (6).

10. Ballast électronique selon l'une des revendications précédentes, **caractérisé en ce que** le circuit de commande (6) est conformé en circuit intégré spécifique à l'application.

11. Ballast électronique selon l'une des revendications précédentes, **caractérisé en ce que** les valeurs numériques générées par les convertisseurs analogiques/numériques (ADC₁, ADC₂) ont une précision de 12 bits.

12. Ballast électronique selon l'une des revendications précédentes, **caractérisé en ce que** le circuit de lissage (3) est formé par un survolteur.

13. Procédé de génération d'une tension de circuit intermédiaire (U_{z}) dans un ballast électronique destiné à au moins une lampe à décharge gazeuse (LA) comportant un circuit redresseur (2) raccordé à une source de tension alternative (U₀), un circuit de lissage (3) raccordé à la sortie du circuit redresseur (2) et destiné à générer la tension de circuit intermédiaire (U_{z}) et un onduleur (4) qui est alimenté avec la tension de circuit intermédiaire (U_{z}) et à la sortie duquel est raccordé un circuit de charge (5) contenant des bornes destinées à la lampe (LA),
le circuit de lissage (3) étant formé par un régulateur de commutation et le ballast comportant en outre un circuit de commande (6) doté de moyens de détection de la tension de circuit intermédiaire (U_{z}) et d'une tension d'entrée (Uᵢ) du circuit de lissage (3) et de moyens destinés à commander un commutateur commandé (S1) du régulateur de commutation,
**caractérisé par** les étapes consistant à
- détecter la tension de circuit intermédiaire (U_{z}) et la tension d'entrée (Uᵢ) au moyen du circuit de commande (6),
- commander le commutateur commandé (S1) au moyen du circuit de commande (6) en fonction de la tension de circuit intermédiaire (U_{z}),
- prolonger le temps de commutation du commutateur commandé (S1) dans le cas où la tension d'entrée (Uᵢ) est inférieure à une valeur déterminée, et
- ne pas prolonger le temps de commutation du commutateur commandé (S1) dans le cas où la tension d'entrée (Uᵢ) est supérieure à la valeur déterminée.

14. Procédé selon la revendication 13, **caractérisé en ce que** la prolongation du temps de commutation du commutateur commandé (S1) est effectuée en ajoutant un intervalle supplémentaire.
